# EUROPÄISCHE PATENTSCHRIFT

(11) **EP 2 614 249 B1**
(45) Veröffentlichungstag und Bekanntmachung des Hinweises auf die Patenterteilung: **21.09.2016**
(21) Anmeldenummer: 11736369.7
(22) Anmeldetag: 27.07.2011
(51) Int. Cl.: F02N 11/08, F02N 99/00, B60W 10/06, F02N 19/00, F02D 41/14

(54) **VERFAHREN UND VORRICHTUNG ZUR STEUERUNG EINER BRENNKRAFTMASCHINE**
METHOD AND DEVICE FOR CONTROLLING AN INTERNAL COMBUSTION ENGINE
PROCÉDÉ ET DISPOSITIF DE COMMANDE D'UN MOTEUR À COMBUSTION INTERNE

(30) Priorität: 10.09.2010 DE 102010040559
(43) Veröffentlichungstag der Anmeldung: 17.07.2013
(73) Patentinhaber: Robert Bosch GmbH, 70442 Stuttgart (DE)
(72) Erfinder: MUELLER, Norbert, 71642 Ludwigsburg (DE); WEISS, Ruediger, 71159 Moetzingen (DE); RAI, Karthik, 70191 Stuttgart (DE); DIETRICH, Manfred, 71706 Markgroeningen (DE); CALVA, Elias, 70563 Stuttgart (DE)
(86) Internationale Anmeldenummer: PCT/EP2011/062922
(87) Internationale Veröffentlichungsnummer: WO 2012/031826

(56) Entgegenhaltungen:
- EP-A2- 1 582 738
- JP-A- 2005 282 434
- US-A1- 2003 140 893

## Beschreibung

### Stand der Technik

Insbesondere bei Fahrzeugen mit Start-/Stopp-Technologie, das heißt wenn der Motor häufig während des normalen Fahrbetriebs aus- und wieder eingeschaltet wird, ist ein komfortabler Auslauf der Brennkraftmaschine und ein schneller Neustart der Brennkraftmaschine von großer Bedeutung.

Die JP-2008298031 A beschreibt ein Verfahren, bei dem die Drosselklappe der Brennkraftmaschine im Auslauf geschlossen wird, um Vibrationen zu unterdrücken. Durch diese Maßnahme wird die Luftfüllung in den Zylindern in der Brennkraftmaschine reduziert, und somit die Rauigkeit des Auslauf verringert, da Kompression und Dekompression minimiert werden.

Für den Neustart der Brennkraftmaschine wird allerdings möglichst viel Luft in den Zylindern, in denen für den Neustart gezündet wird, benötigt. Man ist also in einem Zielkonflikt zwischen einem schnellen Motorstart (der viel Luft im Zylinder erfordert) und einem komfortablen, das heißt vibrationsarmen Motorauslauf (der wenig Luft im Zylinder erfordert). Dieser Zielkonflikt wird mit der vorliegenden Erfindung aufgelöst.

Im Stand der Technik allgemein bekannt siehe zum Beispiel EP 1 582 738 A2 sind Vorrichtungen, die den Hubverlauf insbesondere der Einlassventile der Brennkraftmaschine ändern, und somit die Luftfüllung der Zylinder stellen. Insbesondere ist es bekannt, dass durch elektrohydraulische Aktuatoren der Hubverlauf der Einlassventile in weiten Grenzen beliebig gestaltet werden kann. Brennkraftmaschinen mit einer solchen elektrohydraulischen Ventilverstellung benötigen keine Drosselklappe. Ebenso ist es bekannt, dass der Hubverlauf insbesondere der Einlassventile durch eine Verstellung der Nockenwelle variiert werden kann. Solche Vorrichtungen wie auch die Drosselklappe, mit denen die Luftfüllung der Zylinder verändert werden kann, werden im folgenden auch als Luftdosiereinrichtungen bezeichnet.

### Offenbarung der Erfindung

Wird mit Hilfe einer Luftdosiereinrichtungen eine der Brennkraftmaschine zugeführte Luftmenge reduziert, und erst kurz vor einem Stillstand der Brennkraftmaschine wieder erhöht, so kann ein sogenanntes Motorschütteln, also die spürbare Entstehung von Vibrationen, vermieden werden. Dies wird dadurch erreicht, dass im Auslauf der Brennkraftmaschine die der Brennkraftmaschine zugeführte Luftmenge zunächst reduziert wird, und dann, wenn eine erfasste Drehzahl der Brennkraftmaschine unter einen Drehzahlschwellenwert abgefallen ist, wieder erhöht wird.

Einem Einlasszylinder, der sich unmittelbar nach oder während der Erhöhung der zugeführten Luftmenge in einem Ansaugtakt befindet, wird dann eine erhöhte Luftmenge zugeführt, und er hat dann eine erhöhte Luftfüllung. Geht dieser Einlasszylinder nun in einen Kompressionstakt über, so wird die erhöhte Luftfüllung als Gasfeder, die ein starkes rückstellendes Drehmoments über den Einlasszylinder ZYL2 eine Kurbelwelle ausübt. Umgekehrt übt die jeweilige Luftfüllung in den Zylindern, die in eine Abwärtsbewegung gehen, ein Drehmoment auf die Kurbelwelle aus, dass in Richtung der Vorwärtsdrehung der Kurbelwelle wirkt. Da diese in eine Abwärtsbewegung gehenden Zylinder aber eine geringe Luftfüllung aufweisen, wirkt auf die Kurbelwelle in Summe ein rückstellendes Drehmoment.

Wird der Drehzahlschwellenwert geeignet gewählt, so kann sichergestellt werden, dass der Einlasszylinder nach der Erhöhung der zugemessene Luftmenge nicht mehr in einen Arbeitstakt geht. Dies hat den Vorteil, dass eine Kompression der erhöhten Luftfüllung vermieden wird, was unerwünschte Vibrationen verhindert.

Besonders vorteilhaft ist es, wenn der Drehzahischwellenwert so gewählt wird, dass der Einlasszylinder nach der Erhöhung der zugemessene Luftmenge gerade nicht mehr in den Arbeitstakt geht. Ist der Drehzahlschwellenwert derart gewählt, und ist die Drehzahl der Brennkraftmaschine größer als der Drehzahlschwellenwert, wenn eine Anforderung zum Wiederstart ermittelt wird, so lässt sich ein Verfahren zum besonders schnellen Wiederstart der Brennkraftmaschine realisieren.

Um den Drehzahlschwellenwert robust genauso zu wählen, dass der Einlasszylinder nach der Erhöhung der zugemessene Luftmenge gerade nicht mehr in den Arbeitstakt geht, wird erfindungsgemäß ein Adaptionsverfahren vorgeschlagen. Hierzu ist es notwendig, geeignete Kriterien zu definieren, bei denen der Drehzahlschwellenwert reduziert beziehungsweise erhöht wird.

Wird der Drehzahlschwellenwert reduziert, wenn der Einlasszylinder nach der Erhöhung der zugemessene Luftmenge und vor dem Stillstand der Brennkraftmaschine einen oberen Totpunkt noch durchläuft, so wird auf besonders einfache Weise sichergestellt, dass im weiteren Betrieb der Brennkraftmaschine Vibrationen durch das unzulässige Durchlaufen eines oberen Totpunkt bei hoher Luftfüllung unterbunden werden.

Wird der Drehzahlschwellenwert erhöht, wenn der Einlasszylinder nach der Erhöhung der zugemessene Luftmenge nicht mehr in einen Verdichtungstakt geht, wird auf besonders einfacher Weise sichergestellt, dass der Einlasszylinder im weiteren Betrieb der Brennkraftmaschine beim Stoppen ein Pendelverhalten zeigt.

Wird der Drehzahlschwellenwert abhängig von einem Rückpendelwinkel geändert, so kann in besonders einfacher Weise sichergestellt werden, dass der Einlasszylinder im zukünftigen Betrieb der Brennkraftmaschine ein definiertes Pendelverhalten zeigt.

Wird der Drehzahlschwellenwert erhöht, wenn der Rückpendelwinkel kleiner als ein vorgebbarer Mindestrückpendelwinkel ist, wird erreicht, dass der Einlasszylinder besonders robust den oberen Totpunkt gerade nicht mehr erreicht.

Wird der Drehzahlschwellenwert auf einen vorgebbaren Initialschwellenwert erhöht, so hat das erfindungsgemäße Adaptionsverfahren definierte Einstiegspunkte, und es somit besonders robust.

Wird der Initialschwellenwert so groß gewählt, dass der Einlasszylinder den oberen Totpunkt sicher durchläuft, so wird erreicht, dass der Drehzahlschwellenwert ns stets von zu großen Werten kommend adaptiert wird, was das Adaptionsverfahren besonders einfach macht.

Die Überwachung der Drehzahl der Brennkraftmaschine erfolgt am einfachsten an den Totpunkten. Wird nun bei einem Totpunkt ermittelt, dass die Drehzahl unter die Drehzahlschwelle gefallen ist, so geht der Einlasszylinder gerade in den Einlasstakt. Wird die von der Luftdosiereinrichtung zugemessene Luftmenge erhöht, noch während das Auslassventil des Einlasszylinders geöffnet ist, so wird eine erhöhte Luftmenge von einem Saugrohr in ein Abgasrohr gepumpt. Dies führt zu nachteiliger Geräuschentwicklung. Wird andererseits die von der Luftdosiereinrichtung zugemessene Luftmenge zu spät während des Einlasstakts des Einlasszylinders erhöht, so ergibt sich ein hohes Druckgefälle zwischen Ansaugrohr und Zylinder. Dass Einströmen von Luft führt in diesem Fall zu erheblicher unerwünschter Geräuschentwicklung. Um diese Geräuschentwicklung zu minimieren, ist es vorteilhaft, wenn die von der Luftdosiereinrichtung zugemessene Luftmenge unmittelbar nach dem Ende der Ventilüberschneidung des Einlasszylinders, also unmittelbar nach dem Schließen das Auslassventils, erhöht wird.

Da die Brennkraftmaschine angehalten wird, ist die Einspritzung von Kraftstoff abgeschaltet. Zum schnellen Neustart der Brennkraftmaschine ist dies nachteilig, da kein zündfähiges Gemisch in den Zylindern vorhanden ist. Da bei dem erfindungsgemäßen Verfahren Luft aus dem Saugrohr in den Einlasszylinder geführt wird, lässt sich bei geeigneter Einspritzung vor dem Ende des Einlasstakts sicherstellen, dass im Einlasszylinder ein zündfähiges Kraftstoff-/Luft-Gemisch vorhanden ist. Da der Einlasszylinder in der Nähe eines unteren Totpunkt oder im Kompressionstakt zum Stehen kommt, ist dies für einen schnellen Neustart sehr vorteilhaft, da ein Starter nur eine Drehung von 180° der Kurbelwelle durchführen muss, bis im Einlasszylinder gezündet werden kann.

Wird der Kraftstoff bevor oder unmittelbar nachdem der Einlasszylinder in den Einlasstakt geht eingespritzt, so ist dies besonders günstig für die Gemischbildung. Bei Saugrohreinspritzung kann die zugemessene Kraftstoffmenge besonders fein dosiert werden, bei Direkteinspritzung ist die frühe Einspritzung von Kraftstoff vorteilhaft für die Verwirbelung von Luft und Kraftstoff.

Nachfolgend werden Ausführungsformen der Erfindung unter Bezugnahme auf die beiliegende Zeichnung näher erläutert. In der Zeichnung zeigen:
- Figur 1: die Darstellung eines Zylinders einer Brennkraftmaschine ,
- Figur 2: schematisch den Verlauf einiger Kenngrößen der Brennkraftmaschine beim Stoppen der Brennkraftmaschine,
- Figur 3: den Ablauf des erfindungsgemäßen Verfahrens zum Stoppen der Brennkraftmaschine,
- Figur 4: einen Drehzahlverlauf beim Stoppen und Wiederstart der Brennkraftmaschine,
- Figur 5: detailliert den Drehzahlverlauf beim Stoppen und Wiederstart der Brennkraftmaschine,
- Figur 6: den Ablauf des erfindungsgemäßen Verfahrens beim Wiederstart der Brennkraftmaschine,
- Figur 7: schematisch ein Auspendelverhalten der Brennkraftmaschine bei verschiedenen Drehzahlschwellenwerten,
- Figur 8: den Ablauf des erfindungsgemäßen Verfahrens zur Bestimmung des Drehzahlschwellenwerts.

### Beschreibung der Ausführungsbeispiele

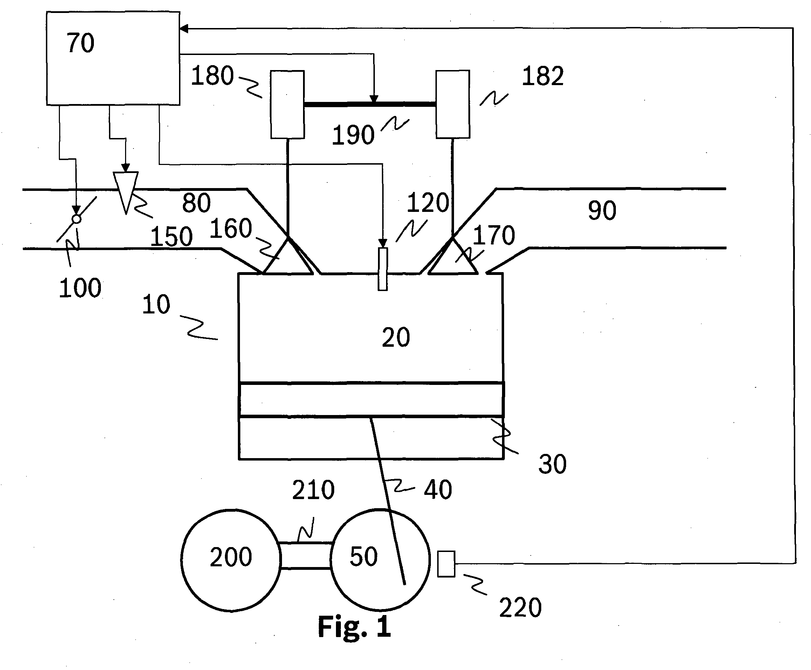

Figur 1 zeigt einen Zylinder 10 einer Brennkraftmaschine mit einem Brennraum 20, einem Kolben 30, der mit einer Pleuelstange 40 mit einer Kurbelwelle 50 verbunden ist. Der Kolben 30 führt in bekannter Weise eine Auf- und Abwärtsbewegung durch. Die Umkehrpunkte der Bewegung werden als Totpunkte bezeichnet. Der Übergang von Aufwärtsbewegung in Abwärtsbewegung wird als oberer Totpunkt, der Übergang von Abwärtsbewegung zu Aufwärtsbewegung als unterer Totpunkt bezeichnet. Eine Winkelstellung der Kurbelwelle 50, ein so genannter Kurbelwellenwinkel, wird in üblicher Weise relativ zum oberen Totpunkt definiert. Ein Kurbelwellensensor 220 erfasst die Winkelstellung der Kurbelwelle 50.

Über ein Ansaugrohr 80 wird in bekannter Weise bei einer Abwärtsbewegung des Kolbens 30 zu verbrennende Luft in den Brennraum 20 gesaugt. Dies wird als Ansaugtakt bzw. Einlasstakt bezeichnet. Über ein Abgasrohr 90 wird die verbrannte Luft bei einer Aufwärtsbewegung des Kolbens 30 aus dem Brennraum 20 gedrückt. Dies wird üblicherweise als Auslasstakt bezeichnet. Die Menge der über das Ansaugrohr 80 angesaugten Luft wird über eine Luftdosiereinrichtung, im Ausführungsbeispiel eine Drosselklappe 100, deren Stellung von einem Steuergerät 70 bestimmt wird, eingestellt.

Über ein Saugrohreinspritzventil 150, das im Ansaugrohr 80 angeordnet ist, wird Kraftstoff in die aus dem Ansaugrohr 80 angesaugte Luft gespritzt und ein Kraftstoff-Luft-Gemisch im Brennraum 20 erzeugt. Die Menge des durch das Saugrohreinspritzventil 150 eingespritzten Kraftstoffs wird vom Steuergerät 70 bestimmt, üblicherweise über die Dauer und/oder die Stärke eines Ansteuersignals. Eine Zündkerze 120 zündet das Kraftstoff-Luftgemisch.

Ein Einlassventil 160 an der Zuführung des Ansaugrohrs 80 zum Brennraum 20 wird über Nocken 180 von einer Nockenwelle 190 angetrieben. Ebenso wird ein Auslassventil 170 an der Zuführung des Abgasrohrs 90 zum Brennraum 20 über Nocken 182 können von der Nockenwelle 190 angetrieben in. Die Nockenwelle 190 ist gekoppelt mit der Kurbelwelle 50. Üblicherweise führt die Nockenwelle 190 pro zwei Umdrehungen der Kurbelwelle 50 eine Umdrehung durch. Die Nockenwelle 190 ist so ausgestaltet, dass sich das Auslassventil 170 im Ausstoßtakt öffnet, und in der Nähe des oberen Totpunkts schließt. Das Einlassventil 160 öffnet in der Nähe des oberen Totpunkts und schließt im Einlasstakt. Einer Phase, in der Auslassventil 170 und Einlassventil einer Technik gleichzeitig geöffnet sind, wird als Ventilüberschneidung bezeichnet. Eine solche Ventilüberscheidung dient beispielsweise zur inneren Abgasrückführung. Die Nockenwelle 190 kann insbesondere vom Steuergerät 70 ansteuerbar ausgestaltet sein, so dass sich abhängig von den Betriebsparametern der Brennkraftmaschine unterschiedliche Hubverläufe des Einlassventils 160 und des Auslassventils 170 einstellen lassen. Ebenso ist aber auch möglich, dass das Einlassventils 160 und das Auslassventil 170 nicht über die Nockenwelle 190, sondern über elektrohydraulische Ventilsteller auf- und abbewegt werden. In diesem Fall können die Nockenwelle 190 sowie die Nocken 180 und 182 entfallen. Ebenso ist bei solchen elektrohydraulische Ventilstellern die Drosselklappe 100 nicht notwendig.

Ein Starter 200 ist über eine mechanische Kopplung 210 mit der Kurbelwelle 50 mechanisch verbindbar. Das Herstellen der mechanische Verbindung zwischen Starter 200 und Kurbelwelle 50 wird auch als Einspuren bezeichnet. Das Lösen der mechanischen Verbindung zwischen Starter 200 und Kurbelwelle 50 wird auch als Abwerfen bezeichnet. Das Einspuren ist nur möglich, wenn die Drehzahl der Brennkraftmaschine unter einem von der Brennkraftmaschine und dem Starter abhängigen Drehzahlschwellenwert liegt.

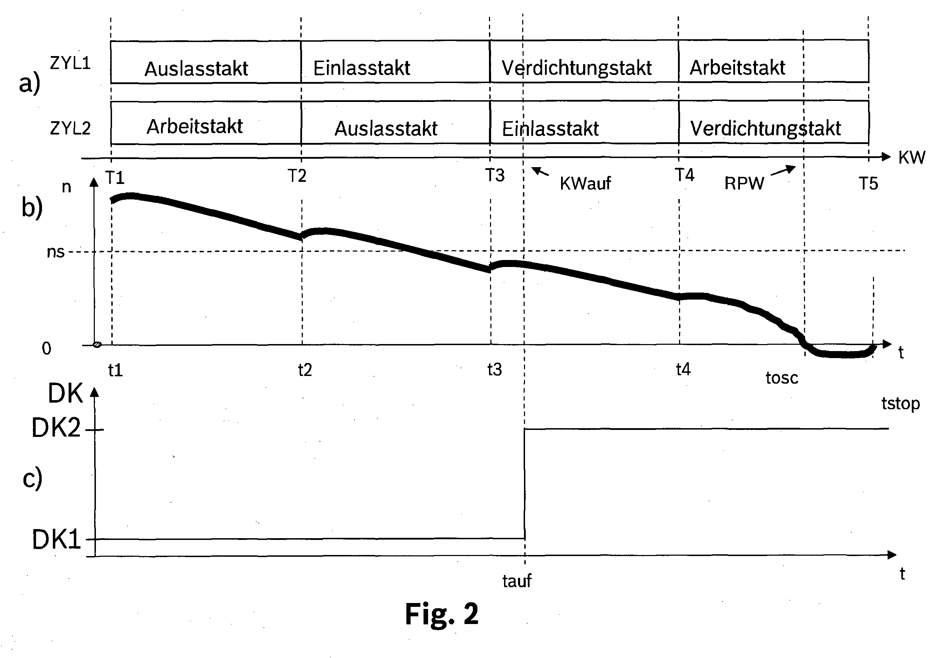

Figur 2 zeigt das Verhalten der Brennkraftmaschine beim Stoppen der Brennkraftmaschine. Figur 2a zeigt die Abfolge der verschiedenen Takte eines ersten Zylinders ZYL1 und eines zweiten Zylinders ZYL2, aufgetragen über den Winkel der Kurbelwelle KW. Eingetragen sind ein erster Totpunkt T1, ein zweiter Totpunkt T2, ein dritter Totpunkt T3, ein vierter Totpunkt T4 und ein fünfter Totpunkt T5 der Brennkraftmaschine. Zwischen diesen Totpunkten durchläuft der erste Zylinder ZYL1 in bekannter Weise den Ausstoßtakt, den Einlasstakt, einen Verdichtungstakt und einen Arbeitstakt. Im Ausführungsbeispiel einer Brennkraftmaschine mit vier Zylindern sind die Takte des zweiten Zylinders ZYL2 um 720°/4= 180° verschoben. Bezogen auf den ersten Zylinder ZYL1 sind der erste Totpunkt T1, der dritte Totpunkt T3 und der fünfte Totpunkt T5 untere Totpunkte, der zweite Totpunkt T2 und der vierte Totpunkt T4 obere Totpunkte. Bezogen auf den zweiten Zylinder ZYL2 sind der erste Totpunkt T1, der dritte Totpunkt T3 und der fünfte Totpunkt T5 obere Totpunkte, der zweite Totpunkt T2 und der vierte Totpunkt T4 untere Totpunkte.

Figur 2b zeigt parallel zu den in Figur 2a dargestellten Takten den Verlauf einer Drehzahl n der Brennkraftmaschine über der Zeit t. Die Drehzahl n ist beispielsweise definiert als die zeitliche Ableitung des Kurbelwellenwinkels KW. Der erste Totpunkt T1 entspricht einem ersten Zeitpunkt t1, der zweite Totpunkt T2 entspricht einem zweiten Zeitpunkt t2 der dritte Totpunkt T3 entspricht einem dritten Zeitpunkt t3, und der vierte Totpunkt T4 entspricht einem vierten Zeitpunkt t4. Zwischen je zwei aufeinander folgenden Zeitpunkten, beispielsweise zwischen dem ersten Zeitpunkt t1 und dem zweiten Zeitpunkt t2 steigt die Drehzahl zunächst kurz an, um dann monoton abzufallen. Der kurze Drehzahlanstieg ist in der Kompression der Luftfüllung in den Zylindern begründet. Ein Zylinder, der einen oberen Totpunkt durchläuft, komprimiert seine Luftfüllung maximal, so dass in ihr Kompressionsenergie gespeichert wird. Diese Kompressionsenergie wird beim Weiterdrehen der Brennkraftmaschine teilweise in Rotationsenergie umgewandelt.

Figur 2c zeigt parallel zu Figur 2a und Figur 2b den zeitlichen Verlauf eines Ansteuersignals DK der Drosselklappe 100. Wie aus dem Stand der Technik bekannt, wird beim Stoppen der Brennkraftmaschine die Drosselklappe 100 zunächst geschlossen, was einen ersten Ansteuersignal DK1 entspricht. Fällt wie in Figur 2b dargestellt die Drehzahl n der Brennkraftmaschine unter einen Drehzahlschwellenwert ns, beispielsweise 300 U/min, so wird erfindungsgemäß zu einem Öffnungszeitpunkt tauf die Drosselklappe 100 geöffnet, was einem zweiten Ansteuersignal DK2 entspricht. Der Öffnungszeitpunkt tauf ist dabei so gewählt, dass er kurz nach dem dritten Totpunkt T3 erfolgt, der der nächste Totpunkt ist, nachdem die Drehzahl n der Brennkraftmaschine unter den Drehzahlschwellenwert ns gefallen ist. Der zweite Zylinder ZYL2 geht zum dritten Totpunkt T3 in den Einlasstakt. Er wird deswegen im Folgenden auch als Einlasszylinder ZYL2 bezeichnet. Im Ausführungsbeispiel fällt der Öffnungszeitpunkt tauf mit dem Ende der Ventilüberschneidung des Einlasszylinder, also mit dem Zeitpunkt des Schließen des Auslassventils 170 des Einlasszylinders ZYL2 zusammen. Bezogen auf den oberen Totpunkt des Einlasszylinders ZYL2 entspricht der Öffnungszeitpunkt tauf einem Öffnungskurbelwellenwinkel KWauf. Zur Ermittlung des Zeitpunkts, zu dem die Drehzahl n der Brennkraftmaschine unter den Drehzahlschwellenwert ns gefallen ist, kann die Drehzahl n der Brennkraftmaschine entweder kontinuierlich überwacht werden. Da der Anstieg der Drehzahl n der Brennkraftmaschine nach den Totpunkten klein ist, und der Öffnungszeitpunkt tauf kurz nach einem Totpunkt liegen soll, ist es aber auch möglich, an jedem Totpunkt der Brennkraftmaschine zu überprüfen, ob die Drehzahl n der Brennkraftmaschine unter die Drehzahlschwelle ns gefallen ist. Im in Figur 2b illustrierten Ausführungsbeispiel wird zum ersten Zeitpunkt t1 und zum zweiten Zeitpunkt t2 erkannt, dass die Drehzahl n der Brennkraftmaschine noch nicht unter die Drehzahlschwelle ns gefallen ist. Zum dritten Zeitpunkt t3 wird erstmalig erkannt, dass die Drehzahl n der Brennkraftmaschine unter die Drehzahlschwelle ns gefallen ist, und die Drosselklappe 100 geöffnet.

Durch die Öffnung der Drosselklappe 100 strömt im Einlasstakt nun viel Luft in den Einlasszylinder. Geht der Einlasszylinder ZYL2 nach dem vierten Zeitpunkt t4 in den Verdichtungstakt, so überwiegt die an der gegenüber den restlichen Zylindern stark erhöhten Luftfüllung zu leistende Kompressionsarbeit die in den expandierenden Zylindern freiwerdende Kompressionsenergie, und die Drehzahl n der Brennkraftmaschine fällt schnell ab, bis sie zu einem Rückpendelzeitpunkt tosc auf null abfällt. Die Rotationsbewegung der Kurbelwelle 50 dreht sich nun um, und die Drehzahl n der Brennkraftmaschine wird negativ. Der Rückpendelzeitpunkt tosc entspricht einem in Figur 2a eingezeichneten Rückpendelwinkel RPW der Kurbelwelle 50. Zu einem Stoppzeitpunkt tstopp bleibt die Brennkraftmaschine stehen. Es ist zu beachten, dass die Darstellung der Zeitachse nichtlinear ist. Entsprechend dem Abfall der Drehzahl n der Brennkraftmaschine ist der zeitliche Abstand zwischen dem dritten Zeitpunkt t3 und dem vierten Zeitpunkt t4 größer als der zeitliche Abstand zwischen dem zweiten Zeitpunkt t2 und dem dritten Zeitpunkt t3, der wiederum größer ist als der zeitliche Abstand zwischen dem ersten Zeitpunkt t1 und dem zweiten Zeitpunkt t2. Der fünfte Totpunkt T5 der Brennkraftmaschine wird nicht erreicht. In dem Zeitintervall zwischen dem Rückpendelzeitpunkt tosc und dem Stoppzeitpunkt tstopp führt die Kurbelwelle 50 eine Pendelbewegung aus, in der der zweite Zylinder ZYL2 in seinem Verdichtungstakt und seinem Einlasstakt pendelt, der erste Zylinder ZYL1 entsprechend in seinem Arbeitstakt und seinem Verdichtungstakt.

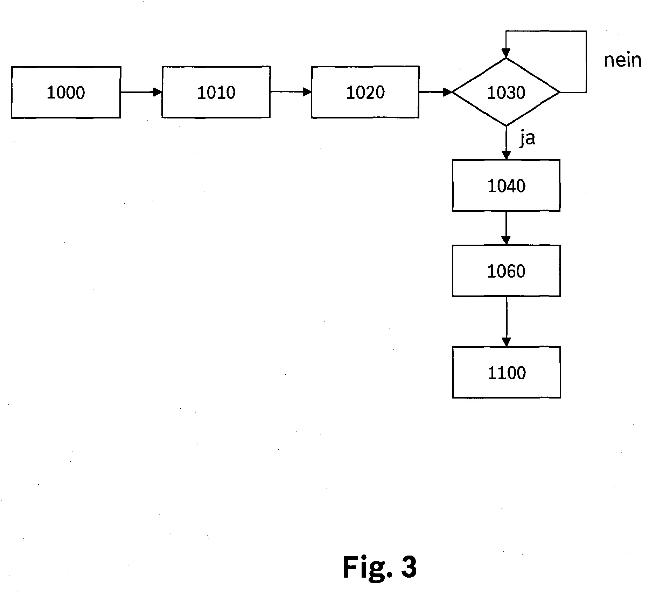

Figur 3 zeigt den Ablauf des Verfahrens, das dem in Figur 2 illustrierten Verhalten entspricht. Bei laufender Brennkraftmaschine wird in einem Stopperfassungsschritt 1000 ermittelt, dass die Brennkraftmaschine ausgestellt werden soll. Es folgt Schritt 1010, indem die Einspritzung und die Zündung abgeschaltet werden. Die Brennkraftmaschine befindet sich also im Auslauf. Anschließend folgt Schritt 1020, in dem die Drosselklappe geschlossen wird. Bei Brennkraftmaschinen mit Nockenwellenverstellung kann in Schritt 1020 alternativ eine Umschaltung auf einem kleineren Nocken erfolgen, so dass die Luftfüllung in den Zylindern verringert wird. Bei Brennkraftmaschinen mit elektrohydraulischer Ventilverstellung können in Schritt 1020 die Ventile der Brennkraftmaschine geschlossen werden. Es folgt Schritt 1030, in dem überprüft wird, ob die Drehzahl n der Brennkraftmaschine den Drehzahlschwellenwert ns unterschritten hat. Ist dies der Fall, folgt Schritt 1040. Ist dies nicht der Fall, wird Schritt 1030 solange wiederholt, bis die Drehzahl n der Brennkraftmaschine den Drehzahlschwellenwert ns unterschritten hat. In Schritt 1040 wird die Drosselklappe 100 zum Öffnungszeitpunkt tauf geöffnet. Bei Brennkraftmaschinen mit Nockenwellenverstellung kann stattdessen in Schritt 1040 beispielsweise auf einen größeren Nocken umgeschaltet werden, so dass sich die Luftfüllung in dem Einlasszylinder ZYL2 erhöht. Bei Brennkraftmaschinen mit elektrohydraulischer Ventilverstellung kann in Schritt 1040 das Einlassventil 160 des Einlasszylinders ZYL2 so angesteuert werden, dass es während des Einlasstakts des Einlasszylinders ZYL2 geöffnet ist, und so die Luftfüllung in dem Einlasszylinder ZYL2 erhöht wird. Es folgt Schritt 1060. Im optionalen Schritt 1060 wird über das Saugrohreinspritzventil 150 Kraftstoff in das Saugrohr 80 der Brennkraftmaschine gespritzt. Diese Einspritzung von Kraftstoff erfolgt so, dass im Einlasstakts ein Kraftstoff-/Luft-Gemisch in den Einlasszylinder ZYL2 gesaugt wird. In Schritt 1100 endet das erfindungsgemäße Verfahren. Wie in Figur 2b illustriert, pendelt die Brennkraftmaschine in eine Stillstandposition, bei der der Einlasszylinder ZYL2 im Einlasstakt oder im Verdichtungstakt zu stehen kommt. Die Einspritzung von Kraftstoff in Schritt 1060 ist für eine Brennkraftmaschine mit Saugrohreinspritzung vorteilhaft für einen schnellen Wiederstart der Brennkraftmaschine.

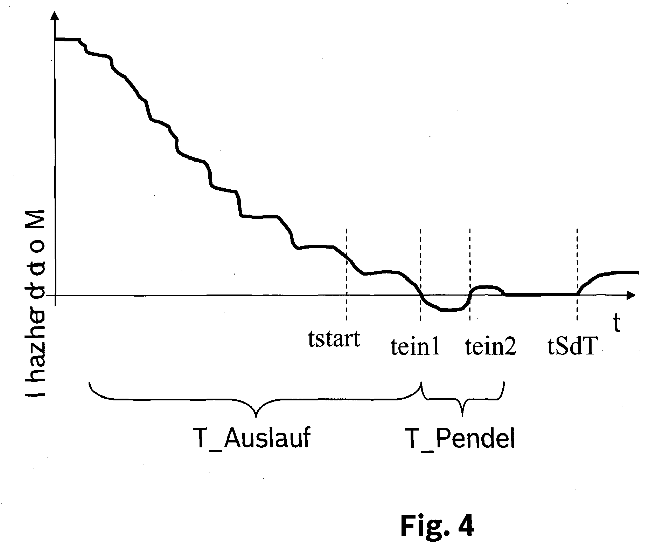

Figur 4 zeigt den zeitlichen Verlauf der Drehzahl n der Brennkraftmaschine beim Stoppen und Wiederstart. Die Drehzahl n der Brennkraftmaschine fällt während einer Auslaufphase T_Auslauf in der in Figur 2b illustrierten Weise ab, und wechselt schließlich das Vorzeichen, wenn die Rotationsbewegung der Brennkraftmaschine sich zum in Figur 2b illustrierten Rückpendelzeitpunkt tosc umkehrt. Dies ist in Figur 4 als Ende der Auslaufphase T_Auslauf und Beginn einer Pendelphase T_Pendel dargestellt. Noch während der Auslaufphase T_Auslauf wird zu einem Startwunschzeitpunkt tstart ermittelt, dass die Brennkraftmaschine wieder gestartet werden soll, beispielsweise weil erfasst wurde, dass ein Fahrer ein Gaspedal gedrückt hat. Eine solche ermittelte Startanforderung vor dem Stoppzeitpunkt tstopp wird auch als "Change of Mind" bezeichnet. In der Pendelphase T_Pendel führt der Verlauf der Drehzahl n der Brennkraftmaschine einen resultierenden Verlauf durch, bis er zu dem in Figur 2b illustrierten Stoppzeitpunkt tstopp auf konstant null fällt und dort bleibt. Der Stoppzeitpunkt tstopp markiert in Figur 4 das Ende der Pendelphase T_Pendel.

Bei dem im Stand der Technik bekannten Verfahren zum Starten der Brennkraftmaschine wird im Anschluss an die Pendelphase T_Pendel erkannt, dass die Brennkraftmaschine steht, wird der Starter 200 eingespurt, und der Starter angesteuert. Nach einer in Figur 4 nicht dargestellten Ansteuertotzeit T_tot des Starters 200 von beispielsweise 50ms beginnt der Starter 200 zu einem Zeitpunkt tSdT eine Drehbewegung und setzt somit die Kurbelwelle 50 wieder in Bewegung. Bei dem erfindungsgemäßen Verfahren wird demgegenüber ein erster Einspurzeitpunkt tein1 und gegebenenfalls ein zweiter Einspurzeitpunkt tein2 ermittelt. Der erster Einspurzeitpunkt tein1 und der zweite Einspurzeitpunkt tein2 sind dadurch charakterisiert, dass die Drehzahl n der Brennkraftmaschine so niedrig ist, dass der Starter 200 eingespurt werden kann. Der erstes Einspurzeitpunkt tein1 und der zweite Einspurzeitpunkt tein2 werden vom Steuergerät 70 ermittelt. Ist der zeitliche Abstand zwischen dem Startwunschzeitpunkt tstart und dem ersten Einspurzeitpunkt tein1 größer als die Ansteuertotzeit T tot, so wird der Starter 200 eingespurt und so angesteuert, dass er zum ersten Einspurzeitpunkt tein1 eine Drehbewegung beginnt. Ist der erster Einspurzeitpunkt tein1 zeitlich zu nah am Startwunschzeitpunkt tstart, so wird der Starter 200 eingespurt und so angesteuert, dass er zum zweiten Einspurzeitpunkttein2 eine Drehbewegung beginnt.

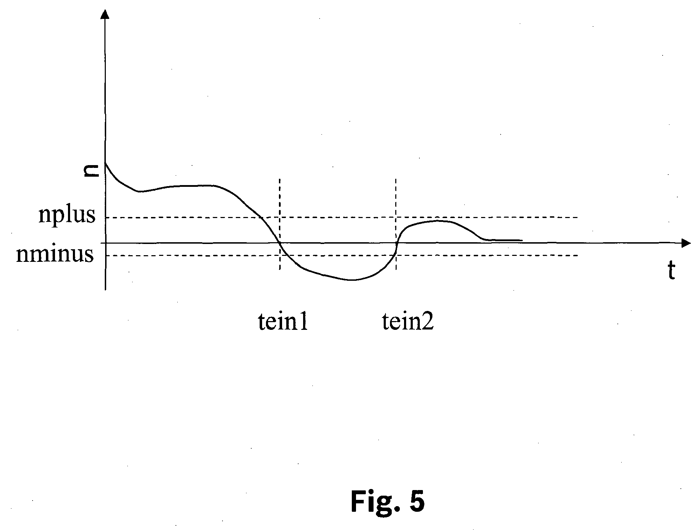

Figur 5 illustriert im Detail die Wahl des ersten Einspurzeitpunkts tein1 und des zweiten Einspurzeitpunkts tein2. Wie beschrieben fällt die Drehzahl n der Brennkraftmaschine nach dem Öffnungszeitpunkt tauf rasch auf null ab, und die Brennkraftmaschine beginnt zum Rückpendelzeitpunkt t_osc eine Rückwärtsbewegung. Der erste Einspurzeitpunkt tein1 wird nach dem Öffnen der Drosselklappe 100 beispielsweise anhand von Kennfeldern oder anhand von im Steuergerät 70 hinterlegter Modelle ermittelt und entspricht den geschätzten Rückpendelzeitpunkt tosc. Selbstverständlich ist es auch möglich, dass anstelle des Rückpendelzeitpunkts tosc andere Zeitpunkte, zu denen die Drehzahl n der Brennkraftmaschine einen Nulldurchgang aufweist, prädiziert werden, und als erster Einspurzeitpunkt tein1 gewählt werden.

Ergänzend zum Nulldurchgang der Drehzahl n der Brennkraftmaschine kann ein zweiter Einspurzeitpunkt tein2 gewählt werden, ab dem sichergestellt ist, dass die Drehzahl n der Brennkraftmaschine ein Drehzahlband, in dem ein Einspuren des Starters 200 möglich ist, nicht mehr verlässt. Dieses Drehzahlband ist beispielsweise gegeben durch eine positive Schwelle nplus, beispielsweise 70 Umdrehungen pro Minute, bis zu der der Starter 200 bei einer Vorwärtsdrehung der Brennkraftmaschine eingespurt werden kann, und durch eine negative Schwelle nminus, beispielsweise 30 U/min, bis zu der der Starter 200 bei einer Rückwärtsdrehung der Brennkraftmaschine eingespurt werden kann. Das Steuergerät 70 berechnet beispielsweise anhand von Kennfeldern, dass die kinetische Energie der Brennkraftmaschine ab dem zweiten Einspurzeitpunkt tein2 soweit abgefallen ist, dass das Drehzahlband [nminus, nplus] nicht mehr verlassen wird. Zum zweiten Einspurzeitpunkt tein2 oder zu einem beliebigen Zeitpunkt nach den zweiten Einspurzeitpunkt tein2 kann der Starter 200 und eingespurt und in eine Drehbewegung versetzt werden.

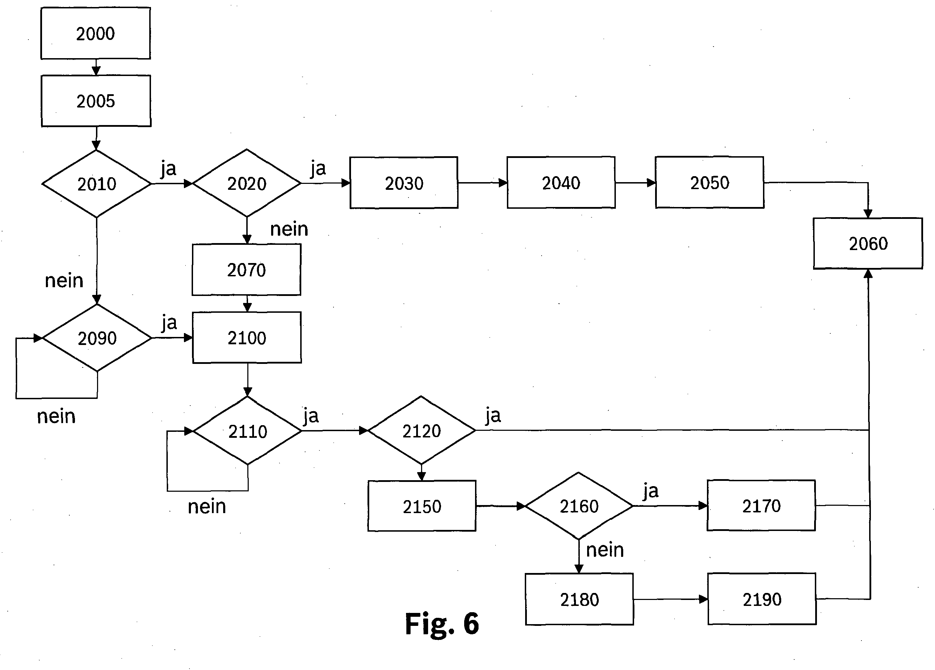

Figur 6 zeigt den Ablauf des erfindungsgemäßen Verfahrens zum Wiederstart der Brennkraftmaschine. Schritt 2000 fällt zusammen mit dem in Figur 3 dargestellten Schritt 1000. In ihm wird eine Anforderung, die Brennkraftmaschine zu stoppen, ermittelt. Es folgt Schritt 2005. In Schritt 2005 wird die Drosselklappe geschlossen, beziehungsweise andere Maßnahmen, z.B. Verstellung der Nocken 180,182 oder eine geeignete elektrohydraulischer Ansteuerung der Ventile 160 und 170, ergriffen, um die Luftfüllung in den Zylindern zu reduzieren. Es folgt Schritt 2010.

In Schritt 2010 wird ermittelt, ob noch während des Auslaufs der Brennkraftmaschine, also während der in Figur 4 dargestellten Auslaufphase T_Auslauf eine Startanforderung zum Starten der Brennkraftmaschine ermittelt wird. Ist dies der Fall, folgt Schritt 2020. Ist dies nicht der Fall, folgt Schritt 2090. In Schritt 2020 wird geprüft, ob die Drehzahl n der Brennkraftmaschine (gegebenenfalls um einen Mindestabstand, beispielsweise 10 Umdrehungen pro Minute) über dem Drehzahlschwellwert ns liegt. Diese Überprüfungen kann kontinuierlich geschehen, oder auch kurbelwellensynchron, insbesondere zu jedem Totpunkt der Brennkraftmaschine. Liegt die Drehzahl n der Brennkraftmaschine über den Drehzahlschwellenwert ns, so folgt Schritt 2030, andernfalls folgt Schritt 2070.

In Schritt 2030 wird die Drosselklappe geöffnet, beziehungsweise andere Maßnahmen, z.B. Verstellung der Nocken 180, 182 oder eine geeignete elektrohydraulischer Ansteuerung der Ventile 160 und 170, ergriffen, um die Luftfüllung in dem Zylinder, der als nächstes im Einlasstakt ist, zu erhöhen. Über das Saugrohreinspritzventil eine 50 wird Kraftstoff in das Ansaugrohr 80 eingespritzt. Es folgt Schritt 2040, indem der Einlasszylinder ZYL2 ermittelt wird, also der Zylinder, dessen Luftfüllung sich als nächstes im Einlasstakt wesentlich erhöht. Der Einlasszylinder ZYL2 geht in den Einlasstakt und saugt das Kraftstoff-/Luft-Gemisch, das sich im Saugrohr 80 befindet ein. Anschließend geht der Einlasszylinder ZYL2 in den Verdichtungstakt über. Die Drehzahl n ist größer als der Drehzahlschwellenwerts ns. Der Drehzahlschwellenwerts ns ist so gewählt ist, dass der Einlasszylinder ZYL2 gerade nicht mehr einen oberen Totpunkt durchläuft. Bei der Drehzahl n der Brennkraftmaschine ist daher sichergestellt, dass der Einlasszylinder ZYL2 einen oberen Totpunkt nochmals durchläuft, und in den Arbeitstakt übergeht. Es folgt Schritt 2050. In Schritt 2050 wird das Kraftstoff-/Luft-Gemisch im Einlasszylinder ZYL2 gezündet, der die Rotation der Kurbelwel-le 50 beschleunigt, und es folgt Schritt 2060. In Schritt 2060 werden weitere Maßnahmen durchgeführt, um den Start der Brennkraftmaschine zu bewerkstelligen, insbesondere wird in den übrigen Zylindern der Brennkraftmaschine entsprechend ein Kraftstoff-/Luft-Gemisch gezündet. Mit dem Start der Brennkraftmaschine endet das erfindungsgemäßen Verfahren.

In Schritt 2070 wird über das Saugrohreinspritzventil 150 Kraftstoff in das Saugrohr 80 eingespritzt. Es folgt Schritt 2100.

In Schritt 2090 wird entsprechend dem in Figur 3 dargestellten Schritt 1030 überprüft, ob die Drehzahl n der Brennkraftmaschine unter den Drehzahlschwellenwert ns abgefallen ist. Ist dies nicht der Fall, wird zurückverzweigt zu Schritt 2010. Ist dies der Fall, folgt Schritt 2100.

Schritt 2100 entspricht Schritt 1040 der Figur 3. Die Drosselklappe wird geöffnet beziehungsweise eine andere Luftdosiereinrichtung, beispielsweise eine Nockenverstellung oder eine elektrohydraulische Ventilsteuerung, so angesteuert, dass die zugeführte Luftmenge erhöht wird. Es folgt Schritt 2110.

In Schritt 2110 wird ermittelt, ob eine Anforderung zum Starten der Brennkraftmaschine vorliegt. Ist dies der Fall, folgt Schritt 2120. Ist dies nicht der Fall, wird Schritt 2110 solange wiederholt, bis eine Anforderung zum Starten der Brennkraftmaschine vorliegt. In Schritt 2120 wird überprüft, ob die Brennkraftmaschine stillsteht. Dies entspricht dem in Figur 4 dargestellten Zeitraum nach dem Ende der Pendelphase T_Phase. Ist dies der Fall, so folgt Schritt 2060, in dem konventionelle Maßnahmen zum Starten der Brennkraftmaschine durchgeführt werden. Wie in Figur 4 dargestellt wird die Brennkraftmaschine zu einem Zeitpunkt tSdT gestartet.

Ist die Brennkraftmaschine im Schritt 2120 nicht im Stillstand, so folgt Schritt 2150. In Schritt 2150 wird der erste Einspurzeitpunkt tein1 prädiziert. Diese Prädiktion erfolgt beispielsweise anhand eines Kennfeld. Anhand der Drehzahl n, die beim letzten Durchlauf eines oberen Totpunkts das Einlasszylinders ZYL2 ermittelt wurde (im Ausführungsbeispiel zum vierten Zeitpunkt t4) kann die kinetische Energie der Brennkraftmaschine ermittelt werden, aus der zweiten Stellung DK2 der Luftdosiereinrichtung kann die Luftfüllung des Einlasszylinders ZYL2, und damit die Stärke der Gasfeder, die vom Einlasszylinder ZYL2 im Verdichtungstakt komprimiert wird, geschätzt werden. Hieraus lässt sich der Rückpendelzeitpunkt tosc schätzen, der als erster Einspurzeitpunkt tein1 prädiziert wird. Es folgt Schritt 2160, in dem geprüft wird, ob die zeitliche Differenz zwischen erstem Einspurzeitpunkt tein1 und dem momentanen Zeitpunkt größer ist als die Ansteuertotzeit T_tot des Starters 200. Ist dies der Fall folgt Schritt 2170. Ist dies nicht der Fall, folgt Schritt 2180.

In Schritt 2180 wird der zweite Einspurzeitpunkt tein2 ermittelt. Wie in Figur 5 erläutert, wird der zweite Einspurzeitpunkt tein2 so gewählt, dass die Drehzahl n der Brennkraftmaschine ab dem zweiten Einspurzeitpunkt tein2 in dem Drehzahlintervall zwischen der negativen Schwelle nminus und der positiven Schwelle nplus bleibt. Im folgenden Schritt 2190 wird der Starter 200 eingespurt und ab dem zweiten Einspurzeitpunkt tein2 gestartet. Es folgt Schritt 2060, in dem die weiteren Maßnahmen zum Starten der Brennkraftmaschine durchgeführt werden. Alternativ ist es auch möglich, in Schritt 2180 ein Einspurintervall zu bestimmen, während dessen die Drehzahl n zwischen der negativen Schwelle nminus und der positiven Schwelle nplus verbleibt. In Schritt 2190 wird in diesem Fall der Starter 200 im Einspurintervall eingespurt und gestartet.

Statt eines Saugrohreinspritzventils 150 ist es auch denkbar, dass das Einspritzventile der Brennkraftmaschine im Brennraum angeordnet ist, also als ein Direkteinspritzventil ausgestaltet ist. In diesem Fall kann die Einspritzung von Kraftstoff in das Saugrohr unmittelbar nachdem Öffnen der Drosselklappe entfallen. Wichtig ist nur, dass Kraftstoff geeignet in den Einlasszylinder ZYL2 eingespritzt wird, bevor er beim Wiederstart gezündet wird.

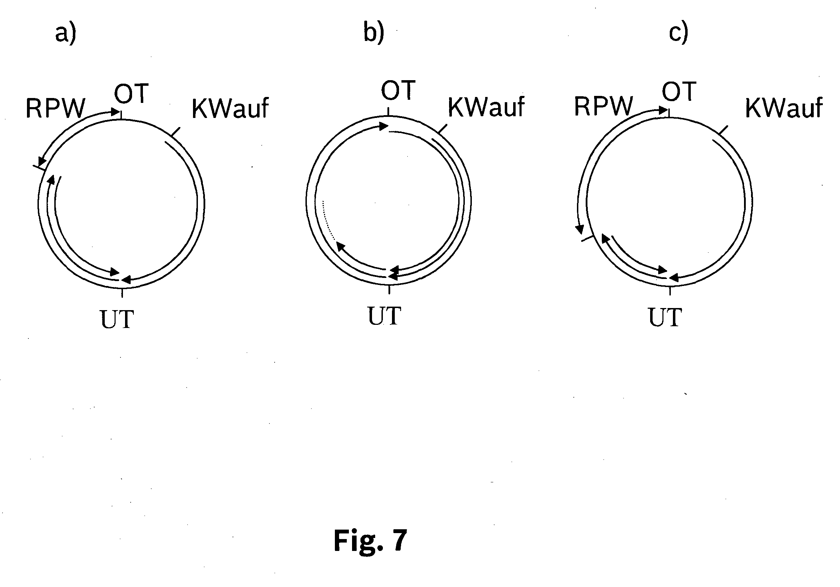

Figur 7 illustriert die Wahl des Drehzahlschwellenwerts ns. Figur 7a illustriert das Pendelverhalten des Einlasszylinders ZYL2 bei korrekt gewählten Drehzahlschwellenwert ns. Beim Öffnungskurbelwellenwinkel KWauf ist der Einlasszylinder ZYL2 in einer Vorwärtsbewegung, durchläuft den dem vierten Totpunkt T4 entsprechenden unteren Totpunkt UT, und kehrt beim Rückpendelwinkel RPW seine Drehrichtung um. Die weitere Pendelbewegung des Einlasszylinders ZYL2 bis zum Stillstand ist in Figur 7a nur angedeutet.

Figur 7b illustriert das Pendelverhalten des Einlasszylinders ZYL2 bei zu hoch gewähltem Drehzahlschwellenwert ns. Ein zu hoher Drehzahlschwellenwert ns bedeutet, dass die kinetische Energie der Brennkraftmaschine beim Öffnen der Drosselklappe 100, also beim Öffnungskurbelwellenwinkel KWauf zu hoch ist. Dies führt dazu, dass der Einlasszylinder ZYL2 den dem vierten Totpunkt T4 entsprechenden unteren Totpunkt UT durchläuft und anschließend auch den dem fünften Totpunkt T5 entsprechenden oberen Totpunkt OT. Dies führt zu unerwünschten Vibrationen im Antriebstrang, und wird vom Fahrer als unkomfortabel wahrgenommen.

Figur 7c illustriert das Pendelverhalten des Einlasszylinders ZYL2 bei zu niedrig gewähltem Drehzahlschwellenwert ns. Ein zu niedriger Drehzahlschwellenwert ns bedeutet, dass die kinetische Energie der Brennkraftmaschine beim Öffnen der Drosselklappe 100, also beim Öffnungskurbelwellenwinkel KWauf zu niedrig ist. Der Einlasszylinder ZYL2 durchläuft in dem vierten Totpunkt entsprechenden unteren Totpunkt UT, hat aber einen relativ großen Rückpendelwinkel RPW. Wird in Schritt 3020 ermittelt, dass die Drehzahl n der Brennkraftmaschine größer ist als der Drehzahlschwellenwerts ns, so kann nicht mehr sicher davon ausgegangen werden, dass der Einlasszylinder ZYL2 über den oberen Totpunkt OT rotiert, und die Brennkraftmaschine somit schnell gestartet werden kann.

Die Wahl des Drehzahlschwellenwerts ns ist also für das Funktionieren des erfindungsgemäßen Verfahrens von zentraler Bedeutung, sie ist andererseits aber sehr schwierig, da sie von Größen abhängt, die sich während der Lebensdauer der Brennkraftmaschine verändert, wie beispielsweise dem Reibkoeffizienten des verwendeten Motoröls.

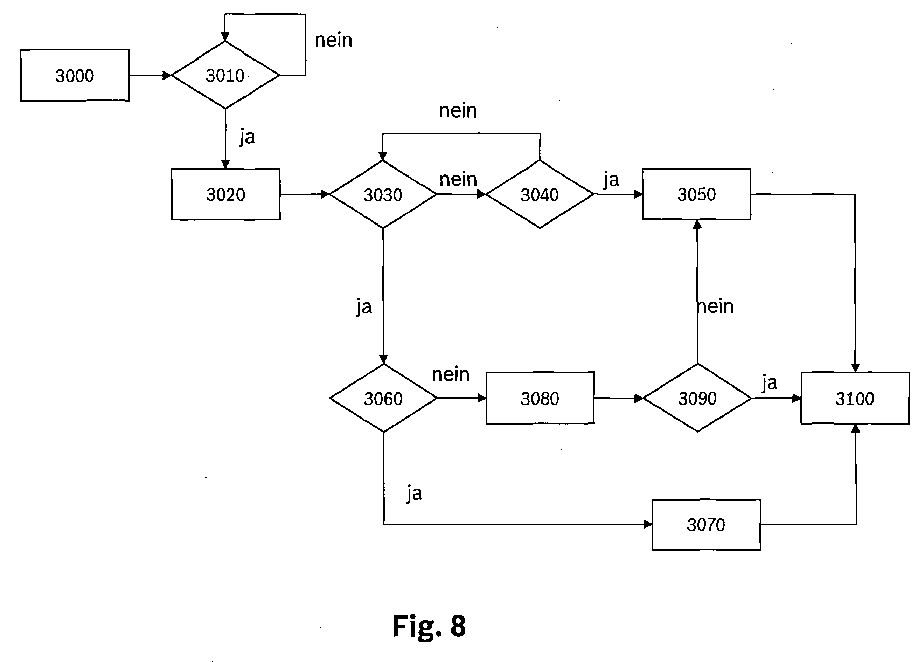

Figur 8 beschreibt ein Adaptionsverfahren, mit dem ein initial vorgegebener Drehzahlschwellenwert ns adaptiert werden kann, um Fehler in der Initialisierung oder Veränderungen der Eigenschaften der Brennkraftmaschine zu kompensieren. In Schritt 3000 wird ermittelt, dass eine Stopp Anforderung an die Brennkraftmaschine vorliegt, und Maßnahmen zum Starten der Brennkraftmaschine eingeleitet. In Schritt 3010 wird entsprechend Schritt 1030 überprüft, ob die Drehzahl n der Brennkraftmaschine unter die Drehzahlschwelle ns abgefallen ist. Ist dies der Fall, folgt Schritt 3020, indem entsprechend Schritt 1040 die Drosselklappe geöffnet wird. Es folgt Schritt 3030, in dem überprüft wird, ob der Einlasszylinder ZYL2 den unteren Totpunkt UT bereits durchlaufen hat. Ist dies nicht der Fall folgt Schritt 3040. Ist es der Fall, folgt Schritt 3060.

In Schritt 3040 wird der Fall abgefangen, dass der Drehzahlschwellenwerts ns so niedrig gewählt ist, dass die Brennkraftmaschine zum stehen kommt, noch bevor der Einlasszylinder ZYL2 den unteren Totpunkt UT durchläuft. Hierzu wird in Schritt 3040 überprüft, ob die Brennkraftmaschine steht. Ist dies nicht der Fall, wird zurückverzweigt zu Schritt 3030. Steht die Brennkraftmaschine, folgt Schritt 3050. In Schritt 3050 wird der Drehzahlschwellenwert ns erhöht. Es folgt Schritt 3100, mit dem das Verfahren endet.

In Schritt 3060 wird die Drehbewegung der Brennkraftmaschine überwacht. Dreht die Brennkraftmaschine den Einlasszylinder ZYL2 weiter über den oberen Totpunkt OT, folgt Schritt 3070. Wird der obere Totpunkt OT nicht erreicht, folgt Schritt 3080. In Schritt 3070 liegt das in Figur 7b illustrierter Verhalten vor, und der Drehzahlschwellenwerts ns wird reduziert. Es folgt Schritt 3100, mit dem das Verfahren endet.

In Schritt 3080 wird der Rückpendelwinkel RPW beispielsweise mithilfe des Kurbelwellensensors 220 bestimmt. Es folgt Schritt 3090. In Schritt 3090 wird überprüft, ob der Rückpendelwinkel RPW kleiner ist als ein Mindestrückpendelwinkel RPWS, der beispielsweise 10° beträgt. Ist der Rückpendelwinkel RPW kleiner als der Mindestrückpendelwinkel RPWS, so liegt das ordnungsgemäße Verhalten gemäß Figur 7a vor, und es folgt Schritt 3100, mit dem das Verfahren endet. Ist der Rückpendelwinkel RPW größer als der Mindestrückpendelwinkel RPWS, so liegt das in Figur 7c illustrierte Verhalten vor, und es folgt Schritt 3050, in dem der Drehzahlschwellenwert ns erhöht wird.

Die Erhöhung des Drehzahlschwellenwerts ns in Schritt 3050 kann entweder inkrementell erfolgen, oder der Drehzahlschwellenwert ns wird auf einen Initialschwellenwert nsi erhöht, bei dem sichergestellt ist, dass die Brennkraftmaschine das in Figur 7b illustrierte Verhalten zeigt, dass der Drehzahlschwellenwert ns dann also zunächst zu groß gewählt ist. Der Initialschwellenwert nsi kann beispielsweise als ein applizierbarer Schwellwert ausgebildet sein. Er wird so gewählt, dass im Rahmen der während des Betriebs der Brennkraftmaschine möglichen Betriebsparameter, beispielsweise unterschiedlicher Leckage der Luftfüllung, unterschiedlichem Motoröl oder unterschiedlicher Exemplarstreuung der Reibwirkung der Brennkraftmaschine die Brennkraftmaschine das in Figur 7b illustrierte Verhalten zeigt, dass also der Einlasszylinder ZYL2 in den Arbeitstakt geht.

Die Adaptation des Drehzahlschwellenwerts ns kann optional auch durchgeführt werden, wenn der Neustart der Brennkraftmaschine nicht ordnungsgemäß abgelaufen ist: Der Drehzahlschwellenwert ns wird erhöht, wenn in Schritt 2020 entschieden wurde, dass die ermittelte Drehzahl n der Brennkraftmaschine größer ist als der Drehzahlschwellenwert ns, und nach Durchführung der Schritte 2030, 2040 und 2050 in Schritt 2060 festgestellt wird, dass der Einlasszylinder ZYL2 (ZYL2) nicht in den Arbeitstakt gegangen ist.

## Patentansprüche

1. Verfahren zum Stoppen einer Brennkraftmaschine, bei dem eine über einer Luftdosiereinrichtung, insbesondere eine Drosselklappe (100) der Brennkraftmaschine zugeführte Luftmenge reduziert wird, nachdem eine Stoppanforderung ermittelt wurde, wobei die über die Luftdosiereinrichtung der Brennkraftmaschine zugeführte Luftmenge wieder erhöht wird, wenn eine erfasste Drehzahl (n) der Brennkraftmaschine einen vorgebbaren Drehzahlschwellenwert (ns) unterschreitet, **dadurch gekennzeichnet, dass** ein Einlasszylinder (ZYL2), dem die Luftmenge zugeführt wird, nach der Erhöhung der zugeführten Luftmenge noch in seinen Verdichtungstakt, aber nicht mehr in einen Arbeitstakt geht.

2. Verfahren nach Anspruch 1 **dadurch gekennzeichnet, dass** der Drehzahlschwellenwert (ns) reduziert wird, wenn der Einlasszylinder (ZYL2) nach der Erhöhung der zugemessenen Luftmenge und vor dem Stillstand der Brennkraftmaschine in den Arbeitstakt geht.

3. Verfahren nach einem der vorhergehenden Ansprüche, **dadurch gekennzeichnet, dass der Drehzahlschwellenwert** erhöht wird, wenn der Einlasszylinder (ZYL2) nach der Erhöhung der zugemessenen Luftmenge nicht mehr in einen Verdichtungstakt geht.

4. Verfahren nach einem der vorhergehenden Ansprüche, **dadurch gekennzeichnet, dass** der vorgebbare Drehzahlschwellenwert abhängig von einem Rückpendelwinkel (RPW) geändert wird.

5. Verfahren nach Anspruch 4, **dadurch gekennzeichnet, dass** der Drehzahlschwellenwert erhöht wird, wenn der Rückpendelwinkel (RPW) größer als ein vorgebbarer Mindestrückpendelwinkel (RPWS) ist.

6. Verfahren nach einem der Ansprüche 4 oder 5, **dadurch gekennzeichnet, dass** der vorgebbare Drehzahlschwellenwert (ns) auf einen vorgebbaren Initialschwellenwert (nsi) erhöht wird.

7. Verfahren nach Anspruch 6, **dadurch gekennzeichnet, dass** der Initialschwellenwert (nsi) so groß gewählt ist, dass der Einlasszylinder (ZYL2) den oberen Totpunkt durchläuft.

8. Verfahren nach einem der vorhergehenden Ansprüche, **dadurch gekennzeichnet, dass** die von der Luftdosiereinrichtung zugemessene Luftmenge unmittelbar nach dem Schließen eines Auslassventils (160) des Einlasszylinders (ZYL2) erhöht wird.

9. Verfahren nach einem der vorhergehenden Ansprüche, **dadurch gekennzeichnet, dass** Kraftstoff so eingespritzt wird, dass im Einlasszylinder (ZYL2) ein zündfähiges Kraftstoff-/Luft-Gemisch vorhanden ist, wenn er aus dem Einlasstakt geht.

10. Verfahren nach einem der vorhergehenden Ansprüche, **dadurch gekennzeichnet, dass** Kraftstoff eingespritzt wird, bevor oder unmittelbar nachdem der Einlasszylinder (ZYL2) in den Einlasstakt geht.

11. Computerprogramm, **dadurch gekennzeichnet, dass** es zur Anwendung in einem Verfahren nach einem der Ansprüche 1 bis 10 programmiert ist.

12. Elektrisches Speichermedium für eine Steuer- und/oder Regeleinrichtung einer Brennkraftmaschine, **dadurch gekennzeichnet, dass** auf ihm ein Computerprogramm zur Anwendung in einem Verfahren der Ansprüche 1 bis 10 abgespeichert ist.

13. Steuer- und/oder Regeleinrichtung einer Brennkraftmaschine, **dadurch gekennzeichnet, dass** sie zur Anwendung in einem Verfahren nach einem der Ansprüche 1 bis 10 programmiert ist.

## Claims

1. Method for stopping an internal combustion engine, in which a quantity of air supplied to the internal combustion engine via an air metering device, in particular a throttle valve (100), is reduced after a stop, request has been detected, wherein the quantity of air supplied to the internal combustion engine via the air metering device is increased again if a detected speed (n) of the internal combustion engine falls below a specifiable speed threshold value (ns), **characterized in that** an inlet cylinder (ZYL2), to which the quantity of air is supplied, still goes into its compression stroke, but no longer goes into a power stroke after the quantity of air supplied is increased.

2. Method according to Claim 1, **characterized in that** the speed threshold value (ns) is reduced if the inlet cylinder (ZYL2) goes into the power stroke after the quantity of air metered in is increased and before the internal combustion engine comes to a halt.

3. Method according to one of the preceding claims, **characterized in that** the speed threshold value is increased if the inlet cylinder (ZYL2) no longer goes into a compression stroke after the quantity of air metered in is increased.

4. Method according to one of the preceding claims, **characterized in that** the specifiable speed threshold value is modified in accordance with a reverse oscillation angle (RPW).

5. Method according to Claim 4, **characterized in that** the speed threshold value is increased if the reverse oscillation angle (RPW) is greater than a specifiable minimum reverse oscillation angle (RPWS).

6. Method according to either of Claims 4 and 5, **characterized in that** the specifiable speed threshold value (ns) is increased to a specifiable initial threshold value (nsi).

7. Method according to Claim 6, **characterized in that** the selected magnitude of the initial threshold value (nsi) is such that the inlet cylinder (ZYL2) passes through the top dead center position.

8. Method according to one of the preceding claims, **characterized in that** the quantity of air metered in by the air metering device is increased immediately after the closure of an outlet valve (160) of the inlet cylinder (ZYL2).

9. Method according to one of the preceding claims, **characterized in that** fuel is injected in such a way that an ignitable fuel/air mixture is present in the inlet cylinder (ZYL2) when it leaves the inlet stroke.

10. Method according to one of the preceding claims, **characterized in that** fuel is injected before or immediately after the inlet cylinder (ZYL2) goes into the inlet stroke.

11. Computer program, **characterized in that** it is programmed for use in a method according to one of Claims 1 to 10.

12. Electric storage medium for an open-loop and/or closed-loop control device for an internal combustion engine, **characterized in that** a computer program for use in a method according to Claims 1 to 10 is stored on said medium.

13. Ppen-loop and/or closed-loop control device for an internal combustion engine, **characterized in that** it is programmed for use in a method according to one of Claims 1 to 10.

## Revendications

1. Procédé pour arrêter un moteur à combustion interne, dans lequel le débit d'air apporté au moteur à combustion interne est réduit par l'intermédiaire d'un dispositif de dosage d'air et en particulier d'un clapet d'étranglement (100) après qu'une demande d'arrêt a été transmise, le débit d'air apporté au moteur à combustion interne par le dispositif de dosage d'air étant de nouveau augmenté lorsque la vitesse de rotation (n) qui a été saisie sur le moteur à combustion interne n'atteint plus une valeur prédéterminée (ns) de seuil de vitesse de rotation,
**caractérisé en ce**
**qu'**un cylindre d'admission (ZYL2), auquel est acheminé le débit d'air, après l'augmentation du débit d'air délivré, entre encore dans sa phase de compression mais plus dans une phase de détente.

2. Procédé selon la revendication 1, **caractérisé en ce que** la valeur (ns) de seuil de vitesse de rotation est réduite si après l'augmentation du débit d'air délivré et avant l'arrêt du moteur à combustion interne, le cylindre d'admission (ZYL2) passe dans la phase de détente.

3. Procédé selon l'une quelconque des revendications précédentes, **caractérisé en ce que** la valeur de seuil de vitesse de rotation est augmentée si le cylindre d'admission (ZYL2), après l'augmentation du débit d'air délivré, ne passe plus dans une phase de compression.

4. Procédé selon l'une des revendications précédentes, **caractérisé en ce que** la valeur prédéterminée de seuil de vitesse de rotation est modifiée en fonction de l'angle de recul (RPW).

5. Procédé selon la revendication 4, **caractérisé en ce que** la valeur de seuil de vitesse de rotation est augmentée si l'angle de recul (RPW) est supérieur à un angle de recul minimum (RPWS) prédéterminé.

6. Procédé selon l'une des revendications 4 ou 5, **caractérisé en ce que** la valeur prédéterminée (ns) de seuil de vitesse de rotation est augmentée à une valeur prédéterminée de seuil initial (nsi).

7. Procédé selon la revendication 6, **caractérisé en ce que** la valeur de seuil initial (nsi) sélectionnée est suffisamment élevée pour que le cylindre en phase d'admission (ZYL2) traverse le point mort haut.

8. Procédé selon l'une des revendications précédentes, **caractérisé en ce que** le débit d'air délivré par le dispositif de dosage d'air est augmenté immédiatement après la fermeture d'une soupape d'échappement (160) du cylindre en phase d'admission (ZYL2).

9. Procédé selon l'une des revendications précédentes, **caractérisé en ce que** du carburant est injecté de telle sorte qu'un mélange allumable de carburant et d'air soit présent dans le cylindre en phase d'admission (ZYL2) lorsqu'il quitte la phase d'admission.

10. Procédé selon l'une des revendications précédentes, **caractérisé en ce que** du carburant est injecté avant ou immédiatement après que le cylindre en phase d'admission (ZYL2) passe dans la phase d'admission.

11. Programme informatique **caractérisé en ce qu'**il est programmé pour être utilisé dans le procédé selon l'une des revendications 1 à 10.

12. Support électrique de mémoire pour dispositif de commande et/ou de régulation d'un moteur à combustion interne, **caractérisé en ce qu'**un programme informatique destiné à être utilisé dans un procédé selon les revendications 1 à 10 y est conservé.

13. Dispositif de commande et/ou de régulation de moteur à combustion interne, **caractérisé en ce qu'**il est programmé pour être utilisé dans un procédé selon l'une des revendications 1 à 10.
